# FASCICULE DE BREVET EUROPEEN

(11) **EP 1 527 032 B1**
(45) Date de publication et mention de la délivrance du brevet: **27.02.2013**
(21) Numéro de dépôt: 03747488.9
(22) Date de dépôt: 02.05.2003
(51) Int. Cl.: C05F 17/02

(54) **INSTALLATION MODULABLE DE COMPOSTAGE DE MATERIAUX ORGANIQUES**
MODULARE KOMPOSTANLAGE FÜR ORGANISCHE MATERIALIEN
MODULAR INSTALLATION FOR COMPOSTING ORGANIC MATERIAL

(30) Priorité: 03.05.2002 FR 0205582
(43) Date de publication de la demande: 04.05.2005
(73) Titulaire: Aces Environnement Developpement, 91250 Saintry sur Seine (FR)
(72) Inventeur: THUROT, Philippe, Jean, Louis, F-91250 Saintry sur Seine (FR)
(74) Mandataire: Catherine, Alain
(86) Numéro de dépôt international: PCT/FR2003/001382
(87) Numéro de publication internationale: WO 2003/093198

(56) Documents cités:
- US-A- 5 628 812
- US-A- 6 099 613

## Description

L'invention concerne en général les installations de compostage de matériaux organiques.

Plus précisément, l'invention concerne une installation de compostage de matériaux organiques, comprenant un ensemble de cellules dans lesquelles les matériaux organiques sont entreposés pour la fermentation et un dispositif d'aération soufflant ou aspirant de l'air à travers les matériaux organiques entreposés dans les cellules, chaque cellule comprenant une dalle de fond, des cloisons et éventuellement un toit, le dispositif de ventilation comprenant au moins un ventilateur muni d'un orifice d'aspiration et d'un orifice de refoulement, et un conduit de ventilation reliant l'orifice d'aspiration ou l'orifice de refoulement à une ou plusieurs cellules.

Des installations de ce type sont connues de l'art antérieur, notamment de la demande de brevet européen EP 0 451 184, qui révèle une installation de compostage comprenant quatre cellules, disposées en deux rangées de deux cellules. Chaque cellule est munie d'une dalle de fond en béton et de deux parois longitudinales opposées en béton. Les dalles de fond des quatre cellules sont indépendantes et discontinues. Des tuyaux d'aspiration percés de trous sont disposés transversalement sur les dalles de fond des cellule, entre les deux parois opposées, sous les matériaux organiques. Ces tuyaux sont espacés d'un intervalle régulier et sont mis en place au fur et à mesure que les matériaux organiques sont chargés dans les cellules.

Les cellules d'une même rangée sont séparées par un caniveau dans lequel passe un collecteur auquel tous les tuyaux d'aspiration sont reliés. Ce collecteur est lui-même relié à l'orifice d'aspiration du ventilateur.

Les installations de l'art antérieurs présentent plusieurs inconvénients importants qui vont être détaillés ci-dessous.

Le premier inconvénient est que la nature des matériaux organiques entrant dans l'installation peut changer en fonction des apports de déchets et des contrats et autorisations d'exploitation obtenues, et nécessiter une évolution de l'organisation ou du procédé d'exploitation de l'installation, évolution qui est difficile à mettre en oeuvre dans les installations de l'art antérieur.

Par ailleurs, les coûts de construction, déterminés en grande partie par le génie civil, sont élevés pour les installations de l'art antérieur.

Le deuxième inconvénient est que l'insertion de poteaux directement fixés dans le radier empêche toute évolution des processus de fermentation.

Le troisième inconvénient est que le dispositif d'aération des installations n'est pas optimisé pour les standards de ventilateur et de conduit de ventilation existants. Cet aspect est important car l'efficacité du processus de compostage, et notamment la hauteur des matériaux à composter et la nature des matériaux et des structurants à mélanger, est directement liée à l'efficacité de l'aération.

Le quatrième inconvénient est qu'on observe des lixiviats en bordure des tas de matériaux organiques, le long des cloisons longitudinales des cellules. Cette présence de lixiviat est source de mauvaise odeur et est inesthétique.

Le cinquième inconvénient est que le développement de la technique d'aération pilotée a conduit à adopter des solutions avec des conduits de ventilation enterrés, constitués d'un tuyau enterré et percé auquel sont raccordées des pipettes aérauliques en matière plastique assurant la diffusion ou l'aspiration de l'air à travers les déchets. Les pipettes aérauliques sont faites en une seule pièce, et sont directement insérées ou clipsées sur le tuyau aéraulique. Ces pipettes présentent l'inconvénient d'obliger les concepteurs de matériel aéraulique à s'équiper de plusieurs moules d'injection en fonction de la hauteur des pipettes aérauliques désirée ou de réaliser un décolletage coûteux des pipettes à une dimension particulière.

Enfin, le sixième inconvénient est que, pour les conduits de ventilation enterrés et principalement en aspiration de l'air dans les processus de fermentation, la reprise des lixiviats qui s'écoulent par les pipettes aérauliques dans le conduit enterré nécessite l'installation de siphons aérauliques qui assurent la reprise de ces lixiviats et qui renchérissent le génie civil. Ces siphons stockent en permanence des lixiviats, ce qui est une source supplémentaire de malodorance sur les sites.

On connaît par le document US-5.628.812 une installation et un procédé de ventilation et contrôle stabilisé pour fermentation d'un produit organique. Toutefois, l'installation correspondante n'est pas simplement adaptable et flexible.

Dans ce contexte, la présente invention a pour but de pallier les inconvénients mentionnés ci-dessus, et de proposer une installation de conception nouvelle, permettant une exploitation flexible en fonction des matériaux à traiter, supprimant les siphons aérauliques, et qui soit optimisée du point de vue des coûts. Par ailleurs, ce changement de conception oblige à repenser le dispositif de ventilation, ce qui permet par la même occasion d'éliminer certains défauts de l'art antérieur.

A cette fin, l'installation de l'invention, par ailleurs conforme à la définition générique qu'en donne le préambule ci-dessus, est essentiellement caractérisée en ce qu'elle comprend un radier constituant les dalles de fond de différentes cellules, ce radier comprenant des moyens pour disposer les cloisons des cellules à différentes positions prédéterminées, la taille des cellules étant de ce fait modulable en fonction des besoins.

Plus particulièrement, l'invention concerne une installation selon la revendication 1.

Les moyens pour disposer les cloisons de manière amovible des cellules comprennent des réservations ménagées dans le radier,

chaque cloison comprend une pluralité de poteaux répartis le long de la cloison et des éléments de bardage fixés de façon amovible sur ces poteaux, l'espace entre deux poteaux adjacents étant obturé *par les éléments* de bardages s'étendant entre les dits poteaux, les poteaux étant engagés de façon amovible par des extrémités inférieures respectives chacun dans une réservation du radier.

De plus chaque tronçon percé du conduit de ventilation est noyé dans le radier, le dispositif d'aération comprenant une pluralité de pipettes débouchant chacune par le dispositif d'aération comprenant une extrémité inférieure dans un orifice porté par le tronçon percé et par une extrémité supérieure sur une face libre du radier, et des dispositifs de clipsage des pipettes sur le tronçon percé, chaque dispositif de clipsage présentant la forme d'un segment tubulaire comprenant à une première extrémité une rainure périphérique extérieure dans laquelle vient s'engager un bord périphérique de l'orifice dans lequel débouche la pipette, cette pipette étant emmanchée à force sur une seconde extrémité du dispositif de clipsage opposée à la première.

De préférence, deux poteaux adjacents d'une même cloison peuvent comprendre des rainures longitudinales respectives en vis à vis, les éléments de bardage obturant l'espace entre les deux poteaux adjacents présentant des bords opposés engagés dans les deux rainures en vis à vis.

Par exemple, la cellule peut comprendre deux cloisons parallèles et opposées présentant chacune un bord longitudinal supérieur, ces cloisons opposées comprenant des poteaux longitudinaux s'étendant le long de leurs bords longitudinaux supérieurs respectifs, ces poteaux longitudinaux comprenant des rainures longitudinales respectives en vis à vis, des éléments de toitures étant engagés par des bords opposés dans les rainures en vis à vis des deux poteaux longitudinaux.

Dans un mode de réalisation possible de l'invention, chaque poteau adjacent d'une même cloison peut comprendre en position haute des rainures supplémentaires, longitudinales perpendiculaires aux rainures verticales permettant grâce à des cloisons amovibles de fermer les cellules délimitées par les cloisons horizontales latérales, et permettre la formation d'un toit permettant de fermer la cellule.

De préférence, le radier peut comprendre un *caniveau et présenter* une partie pentée en direction de ce caniveau, le radier comprenant également une pluralité d'orifices d'évacuation des lixiviats répartis le long du caniveau en bas de ladite partie pentée, ces orifices d'évacuation débouchant dans ce *caniveau.*

Avantageusement, les réservations sont disposées en plusieurs rangées parallèles perpendiculaires au caniveau, le conduit de ventilation comprenant des tronçons percés s'étendant dans les plans médians desdites rangées parallèles et pentés en direction de premières extrémités respectives situées dans le caniveau, ces premières extrémités des conduits de ventilation étant munies de vannes de vidange des lixiviats.

De préférence, *l'organe de ventilation* comprend un point bas muni d'une vanne de vidange des condensats.

Par exemple, les vannes de vidange des lixiviats et/ou des condensats peuvent être des vannes à membranes ou à manchon commandées par un dispositif de commande à air comprimé.

Avantageusement, le dispositif de commande des vannes de vidange des lixiviats et des condensats peut être manuel ou automatisé et comprendre alors une électrovanne pouvant adopter une position ouverte dans laquelle les vannes de vidange sont alimentées en air comprimé et sont en positions fermées, et une position fermée dans laquelle les vannes de vidange ne sont pas alimentées en air comprimé et sont en positions ouvertes, l'électrovanne adoptant sa position ouverte quand *l'organe* de *ventilation* fonctionne et sa position fermée quand *l'organe de ventilation* ne fonctionne pas.

Avantageusement, chaque tronçon percé du conduit de ventilation est noyé dans le radier.

Par exemple, le radier peut comprendre une réservation tubulaire dans laquelle s'étend le tronçon percé du conduit de ventilation, cette réservation tubulaire permettant le passage des conduits de ventilation débouchant dans le caniveau ; cette réservation tubulaire comportant au moins un des orifices d'évacuation gravitaire des lixiviats débouchant directement dans la réservation tubulaire et permettant l'écoulement gravitaire des lixiviats dans le caniveau.

De préférence, le tronçon percé du conduit de ventilation peut présenter une seconde extrémité opposée à la première munie d'un tube débouchant sur la face libre du radier par une extrémité, cette extrémité étant bouchée par un bouchon vissable ou amovible, et pouvant être connectée à un dispositif d'injection d'eau de rinçage du tronçon percé.

De préférence, le conduit de ventilation peut présenter deux extrémités opposées munies chacune d'un bouchon vissable ou amovible et *dépourvues chacune de siphon aéraulique, y compris pour les dispositifs d'aération fonctionnant en aspiration.*

Par exemple, chaque tronçon percé du conduit de ventilation peut être disposé sur la face libre du radier, sa première extrémité étant reliée à l'orifice d'aspiration de *l'organe de ventilation,* ce tronçon percé étant percé d'une pluralité de trous, le nombre de trous par unité de longueur du tronçon percé augmentant progressivement le long du tronçon percé, et étant minimum à la première extrémité et maximum à une seconde extrémité dudit tronçon opposée à la première, ou les *trous étant répartis sur la périphérie de sections du conduit de ventilation, l'écart entre les sections se réduisant plus on s'éloigne de l'organe de ventilation.*

Avantageusement, le radier peut comprendre des caniveaux secondaires, chaque tronçon percé du conduit de ventilation s'étendant le long d'un caniveau secondaire, sa première extrémité étant reliée à l'orifice d'aspiration de *l'organe de ventilation,* chaque tronçon percé présentant une pluralité de sections chacune percée de trous répartis le long de la périphérie de ladite section, les trous situés dans une moitié inférieure d'une section étant en nombre plus grand et/ou de diamètres plus grands que les trous situés dans une moitié supérieure de ladite section.

De préférence, le dispositif d'aération peut comprendre une entrée d'air venant de l'extérieur de l'installation, une sortie d'air vers l'extérieur de l'installation, et un ou plusieurs clapets de ventilation obturant l'entrée d'air et/ou la sortie d'air quand *l'organe de ventilation* est à l'arrêt et que les cellules sont couvertes par un toit.

Par exemple, l'air soufflé ou aspiré à travers les matériaux organiques peut passer dans un filtre biologique après avoir quitté la cellule, ce filtre biologique comprenant une dalle de fond constituée par le radier, et des réservations, des poteaux et des cloisons du même type que celles des cellules.

En l'absence de poteaux dans les réservations, celles-ci peuvent être obturées par des bouchons amoviblement fixés dans les réservations par vissage ou clipsage.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue en perspective de deux cellules et d'un filtre biologique d'une installation de compostage suivant un premier mode de réalisation de l'invention, les cellules et le filtre étant vides et leurs toits n'étant pas représentés,
- les figures 2A et 2B sont des vues en perspective des poteaux et des éléments de bardage constituant les cloisons des cellules de la figure 1,
- la figure 2C est une vue en perspective des poteaux et des éléments de bardage permettant de fermer les cellules de la figure 1 par un toit amovible,
- la figure 3 est une vue de dessus partielle suivant la flèche III de la figure 1,
- la figure 4 est une vue en coupe dans le plan IV-IV de la figure 1, la cellule et le filtre biologique étant remplis respectivement de matériaux organiques et de média filtrant, les toits étant représentés,
- la figure 5 est une vue en coupe d'une variante de réalisation de l'installation comprenant plusieurs filtres biologiques en série,
- la figure 6A est une vue éclatée en coupe d'une pipette clipsée sur le tronçon noyé du conduit de ventilation à *l'aide d'un dispositif* de *clipsage,* et la figure 6B est une vue en coupe d'une variante de réalisation de ce dispositif de clipsage,
- la figure 7 est une vue en coupe dans le plan VII-VII de la figure 1,
- la figure 8 est une vue similaire à la figure 1 pour un deuxième mode de réalisation de l'invention,
- la figure 9 est une vue en coupe dans le plan IX-IX de la figure 8,
- la figure 10 est une vue similaire à la figure 1 pour une variante du deuxième mode de réalisation de l'invention, et
- les figures 11A et 11B sont des vues en perspective du tuyau percé de la figure 10.

L'installation de compostage de matériaux organiques 1 comprend un ensemble de cellules 10 dans lesquelles les matériaux organiques 1 sont entreposés pour fermentation, et un dispositif d'aération 20 soufflant ou aspirant de l'air à travers les matériaux organiques 1 entreposés dans les cellules 10.

Les matériaux organiques à traiter rentrent dans trois catégories : les déchets verts, comme par exemple l'herbe coupée pendant les tontes de pelouses, les biodéchets, comme par exemple les fruits et légumes, et les boues.

L'installation comprend typiquement quatre cellules, mais peut en comporter plus ou moins suivant la composition des matériaux organiques entrants et le procédé de traitement qui leur est appliqué.

Ce procédé comprend généralement une succession de phases de fermentation, suivies chacune par une opération de tri et d'orientation des matériaux en fonction de leur état à l'issue de la phase de fermentation. L'invention ne porte pas sur les installations de tri et criblage des matériaux organiques, qui ne sont donc pas décrites ici. Les phases de fermentation se font dans les différentes cellules 10 de l'installation.

Chaque cellule 10 comprend une dalle de fond 11, des cloisons 12 et éventuellement un toit 16.

Le dispositif d'aération 20 comprend au moins un *organe* de *ventilation* 21, typiquement *un ventilateur,* muni d'un orifice d'aspiration de l'air 211 et d'un orifice de refoulement de l'air 212, et un conduit de ventilation 22 reliant l'orifice d'aspiration 211 ou l'orifice de refoulement 212 à une ou plusieurs cellules 10.

L'installation peut donc fonctionner soit en aspiration soit en refoulement.

Selon l'invention, l'installation comprend un radier 40 constituant les dalles de fond 11 de différentes cellules 10, ce radier 40 comprenant des moyens 41 pour disposer les cloisons 12 des cellules 10 à différentes positions prédéterminées, la taille des cellules 10 étant de ce fait modulable en fonction des besoins.

Il est ainsi possible de retrouver l'utilisation complète de la dalle en retirant les poteaux et bardages ou de changer le nombre et la taille des cellules 10 en cours d'exploitation de l'installation, ce qui permet de modifier le procédé de traitement des matériaux organiques en fonction de la composition des matériaux entrants et des quantités à traiter pour chaque catégorie de matériaux.

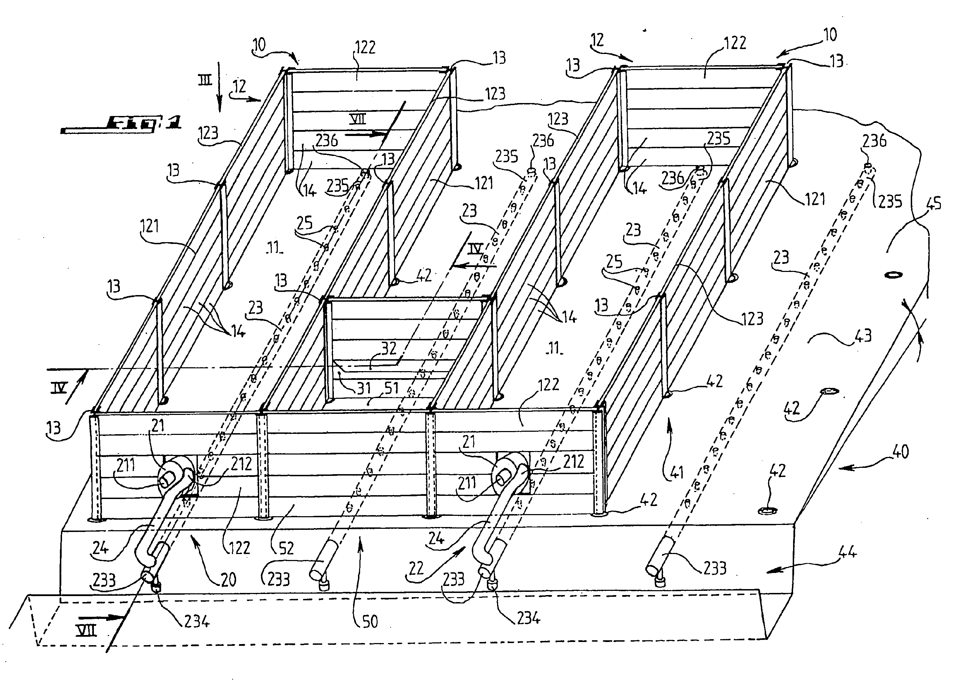

Comme le montre la figure 1, les moyens 41 pour disposer les cloisons 12 des cellules 10 comprennent des réservations 42 ménagées dans le radier 40.

Ces réservations 42 sont de préférence disposées en plusieurs rangées parallèles s'étendant dans un sens longitudinal, les rangées étant régulièrement espacées entre elles, et les réservations 42 d'une même rangée étant également régulièrement espacées.

Les réservations 42 sont donc agencées à la surface du radier 40 pour former les noeuds d'un quadrillage de maille rectangulaire.

Comme on le voit également sur la figure 1, chaque cloison 12 comprend une pluralité de poteaux 13 répartis le long de la cloison 12, et des éléments de bardage 14 fixés de façon amovible sur ces poteaux 13.

L'espace entre deux poteaux adjacents 13 dans une cloison 12 est obturé sur toute la hauteur de la cloison par les éléments de bardages 14 s'étendant entre lesdits poteaux 13.

Les poteaux 13 sont engagés de façon amovible par des extrémités inférieures respectives chacun dans une réservation 42 du radier 40.

Les cellules 10 de l'invention présentent une forme rectangulaire allongée dans le sens longitudinal, et comprennent généralement quatre cloisons 12 droites, deux cloisons longitudinales 121 parallèles et opposées et deux cloisons transversales 122 parallèles et opposées. Elles peuvent être équipées d'un toit 16.

Les poteaux 13 d'une même cloison longitudinale 121 sont engagés dans les réservations 42 d'une même rangée. Les poteaux 13 d'une cloison transversale 122 sont engagés dans des réservations 42 appartenant à des rangées différentes.

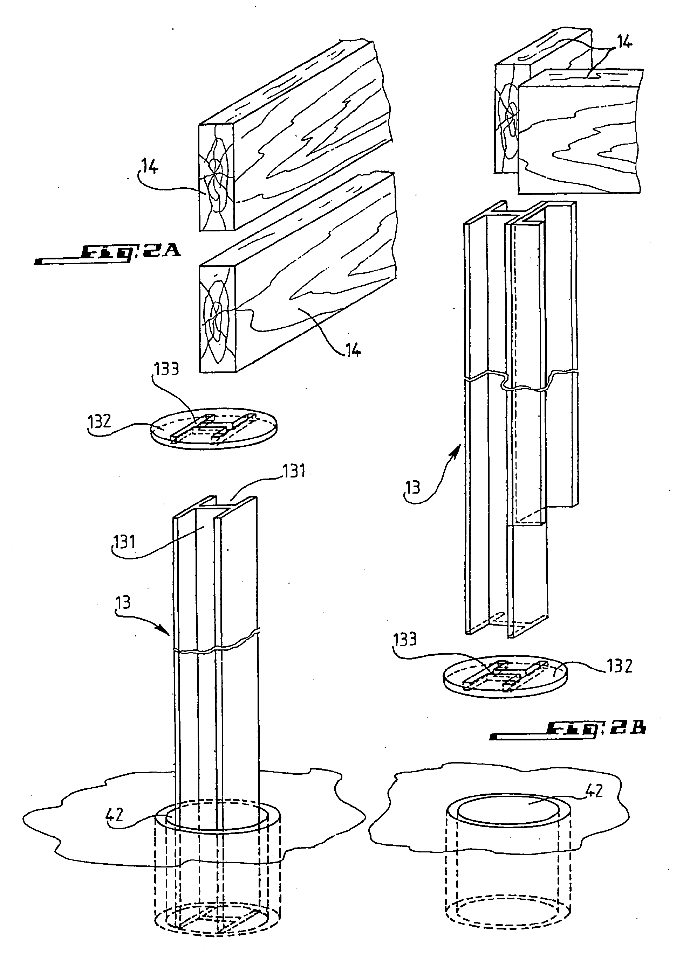

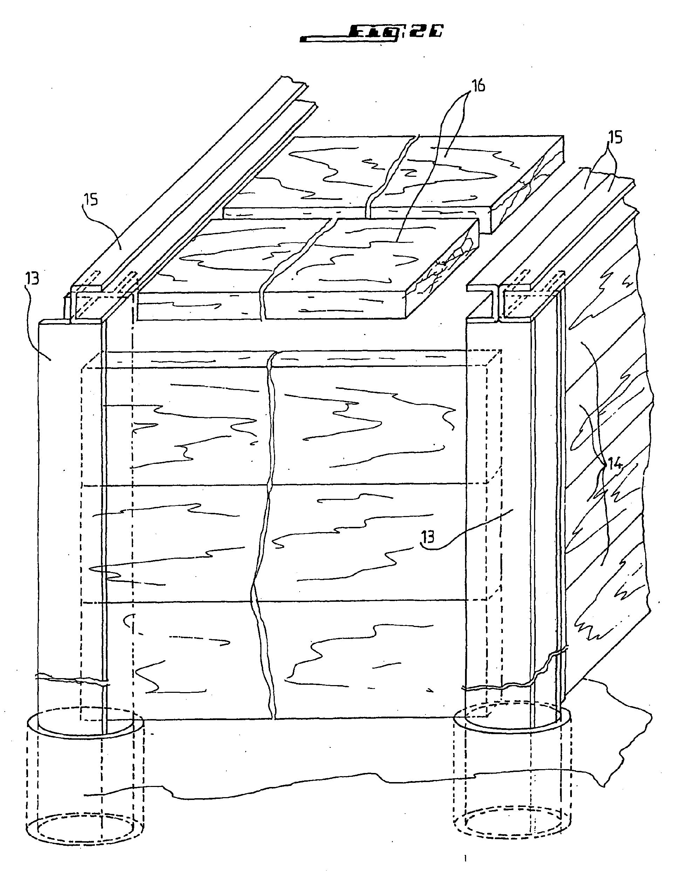

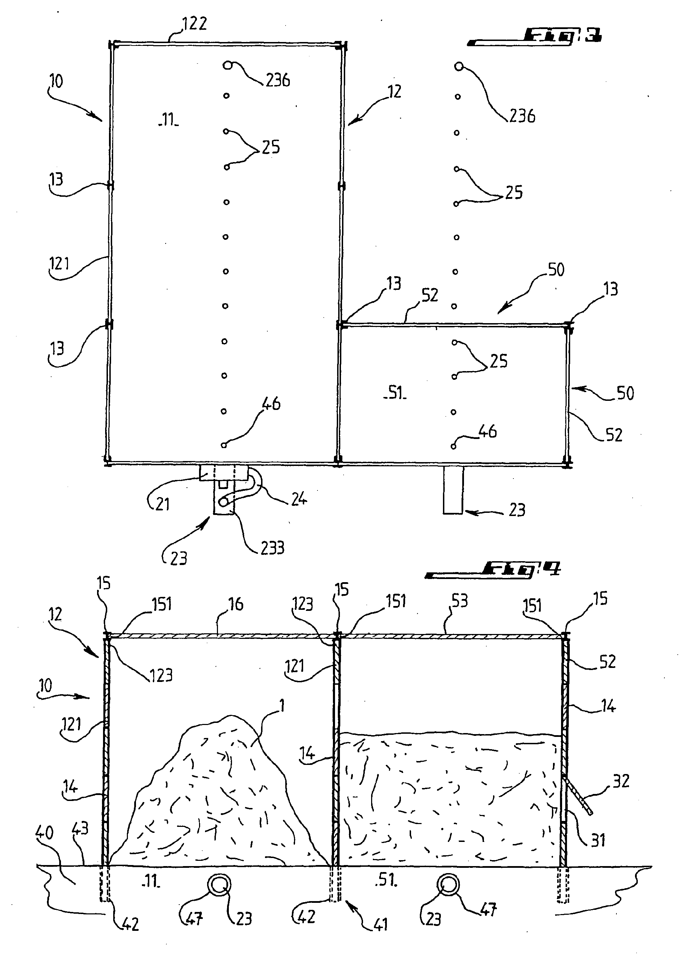

Comme le montrent les figures 2A, 2B, 2C et 3, les poteaux 13 présentent des formes différentes suivant qu'ils sont disposés ou non à un angle entre deux cloisons 12 ou qu'ils soutiennent un toit amovible permettant de fermer une cellule.

Les poteaux 13 comprennent tous une ou plusieurs rainures 131, ces rainures 131 présentant des sections identiques en créneau.

Les poteaux 13 dits de milieu de cloison, c'est-à-dire qui ne sont pas disposés à un angle, sont des profilés métalliques présentant une forme en I. Ils comprennent donc deux rainures 131 parallèles et opposées, et deux faces pleines latérales opposées.

Les poteaux 13 d'angle comprennent chacun un premier profilé en I identique à un poteau de milieu de cloison, et un deuxième profilé fixé rigidement sur le profilé en I.

Ce deuxième profilé présente une section en créneau, de même forme et de même taille que la moitié du I du premier profilé. Ce deuxième profilé comprend donc une rainure longitudinale 131 d'un côté, et une face pleine d'un autre côté opposé à la rainure. Il est plaqué par sa face pleine sur une des deux faces pleines latérales du premier profilé en I, de telle sorte que le poteau d'angle 13 présente trois rainures 131 identiques, ouvertes de trois côtés différents, deux côtés opposés et un côté perpendiculaire aux deux autres.

Les profilés sont fixés l'un à l'autre par des moyens simples, tels que le soudage ou à l'aide de boulons.

Comme le montrent les figures 1 et 3, deux poteaux 13 adjacents d'une même cloison 12 présentent des rainures 131 respectives parallèles et en vis à vis. Ceci est vrai que les deux poteaux soient deux poteaux de milieu de cloison ou un poteau de milieu de cloison et un poteau d'angle.

Les éléments de bardages 14 obturant l'espace entre deux poteaux 13 adjacents présentent des bords opposés engagés de façon amovible dans les rainures 131 en vis à vis des deux poteaux 13.

Ces éléments de bardage 14 sont par exemple des planches de bois, des madriers en bois, des plaques de matériaux plastiques, ou des toiles tendues sur des cadres rigides.

Si nécessaire, l'étanchéité entre les différents éléments de bardage et entre les éléments de bardage et le sol est renforcée, par exemple par un joint posé sous forme de pâte.

Comme le montre la figure 2A, les réservations 42 sont de forme cylindrique et sont revêtues intérieurement en acier. Elles présentent un diamètre adapté de façon à ce que les poteaux 13 de milieu de paroi soient en appui le long de quatre génératrices de la réservation 42, par les bords libres des quatre branches du I.

On peut voir sur la figure 2B que les seconds profilés des poteaux d'angles ne descendent pas jusqu'aux extrémités de ces poteaux engagées dans les réservations 42. Ces dites extrémités présentent donc chacune une section en I, apte à être engagée dans la réservation.

Chaque poteau 13 est équipé d'une collerette 132 en forme de disque, visible sur les figures 2A et 2B, qui vient obturer la réservation 42 dans laquelle ledit poteau est engagé. Cette collerette est percée d'une ouverture 133 en forme de I, de taille correspondante à la section de l'extrémité des poteaux 13. Les extrémités des poteaux 13 traversent ces ouvertures 133 pour s'engager dans les réservations 42. Les collerettes peuvent être métalliques ou en matière plastique, et sont fixées sur les poteaux 13. Elles permettent d'éviter que les matériaux organiques ou le lixiviat ne pénètrent dans la réservation.

En l'absence de poteaux 13 dans les réservations 42, ces dernières peuvent être obturées par des bouchons (non représentés) amoviblement fixés dans les réservations par vissage ou par clipsage.

Les cloisons longitudinales 121 opposées de la cellule 10 représentée sur la figure 4 comprennent des poteaux longitudinaux 15 s'étendant le long de bords longitudinaux supérieurs 123 respectifs de ces cloisons.

Ces poteaux longitudinaux 15 sont identiques aux poteaux 13 de milieu de cloison et présentent une section en I, de telle sorte que les poteaux longitudinaux 15 des deux cloisons longitudinales opposées comprennent des rainures 151 longitudinales respectives en vis à vis.

Des éléments de toiture 16 sont engagés par des bords opposés dans les rainures 151 en vis à vis des poteaux longitudinaux 15 des deux cloisons longitudinales 121.

Ces éléments de toiture 16 peuvent être des planches en bois, des madriers en bois, ou une bâche déployable et rétractable manuellement ou automatiquement.

Les poteaux 13 et les poteaux longitudinaux 15 sont percés par des yeux, utilisés pour lever et déplacer ces poteaux à l'aide de moyens de levage.

Comme précisé plus haut, l'installation peut fonctionner soit en aspiration soit en refoulement.

Dans le premier cas, le conduit en aspiration d'air de ventilation 22 est relié à l'orifice d'aspiration 211 du ventilateur 21. L'air venant de l'extérieur pénètre à l'intérieur de la cellule 10 par le dessus des déchets ou dans le cas où la cellule est fermée par un toit 16, par une entrée d'air 30, passe à travers les matériaux organiques 1, puis est capté par le conduit de ventilation 24, aspiré par le ventilateur 21 et refoulé vers un filtre biologique 50, et sort du filtre biologique 50 pour être rejeté vers l'extérieur par une sortie d'air 31. La cellule 10 et le filtre biologique 50 sont respectivement maintenus en dépression et en surpression par rapport à l'extérieur quand le ventilateur 21 fonctionne.

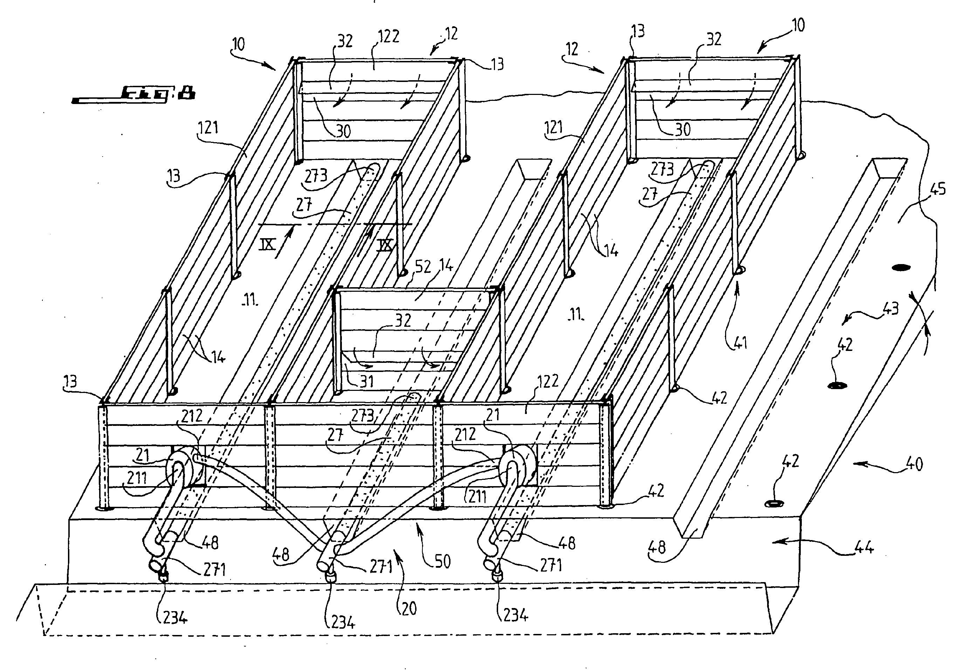

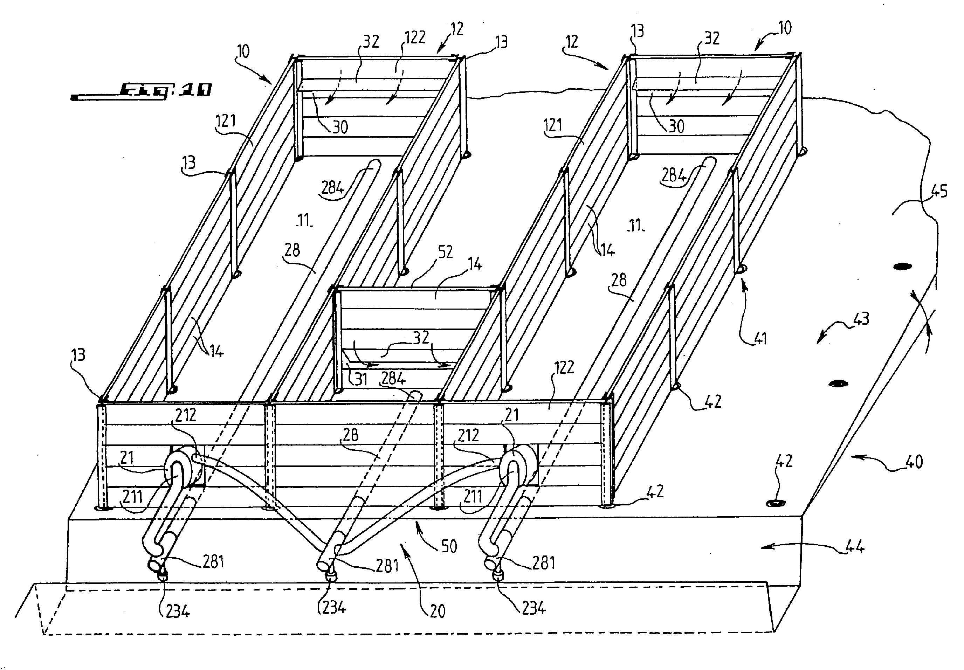

Les figures 8 et 10 représentent deux modes de réalisation de l'installation de compostage correspondant au premier cas.

Dans le second cas, en soufflage d'air sous le tas de matériaux organiques, le conduit de ventilation 22 est relié à l'orifice de refoulement 212 du ventilateur 21. L'air venant de l'extérieur est aspiré par le ventilateur 21, refoulé dans le conduit de ventilation 22 puis insufflé à l'intérieur de la cellule 10 sous les matériaux organiques 1. L'air passe à travers ceux-ci puis est dirigé vers le filtre biologique 50, et sort de ce filtre biologique 50 pour être rejeté vers l'extérieur par la sortie d'air 31. La cellule 10 et le filtre biologique 50 sont maintenus en surpression par rapport à l'extérieur quand le ventilateur 21 fonctionne.

La figure 1 représente un premier mode de réalisation de .l'installation de compostage correspondant au second cas. Le radier 40 comprend un caniveau 44 et présente une partie 45 pentée en direction d'un bord de ce caniveau 44, sur laquelle est disposée une ou plusieurs cellules 10. Deux cellules de fermentation et un bio-filtre sont représentés sur la figure 1. Les cloisons longitudinales 121 de ces cellules 10 s'étendent perpendiculairement à ce caniveau 44. L'une des deux cloisons transversales 122 de chaque cellule 10 s'étend le long du caniveau 44.

L'installation peut comprendre plusieurs radiers 40 portant des cellules 10, associés à plusieurs caniveaux 44 si nécessaire.

Elle peut par exemple comprendre deux radiers 40, disposés des deux côtés opposés du caniveau 44 et pentés tous les deux vers ce même caniveau 44.

Le dispositif d'aération 20 comprend au moins un ventilateur 21 par cellule 10, ce ventilateur étant fixé à la paroi transversale 122 de la cellule située le long du caniveau 44. Il est également possible d'utiliser un même ventilateur pour plusieurs cellules 10 ou que le ventilateur ne soit pas fixé à la paroi de cellule.

Le dispositif d'aération 20 comprend également une pluralité de tronçons percés 23 de conduit de ventilation 22 noyés dans la partie pentée 45 du radier 40. Ces tronçons percés 23 sont parallèles et perpendiculaires au caniveau 44, et s'étendent dans des plans médians des rangées de réservations 42.

Les ventilateurs 21 sont chacun reliés à un ou plusieurs de ces tronçons percés 23 par des tronçons aériens 24 de conduit de ventilation.

Chaque tronçon percé 23 est percé d'orifices 231, alignés, régulièrement disposés tous les vingt centimètres environ le long du tronçon percé 23 et disposés au sommet de celui-ci.

Le dispositif d'aération 20 comprend également une pluralité de pipettes verticales 25 débouchant chacune par une extrémité inférieure dans un des orifice 231 et par une extrémité supérieure sur une face libre 43 du radier 40, et des dispositifs de clipsage 26 des pipettes 25 sur le tronçon percé 23. L'air refoulé par le ventilateur 21 dans le tronçon percé 23 est insufflé dans la cellule 10 par ces pipettes. Les pipettes 25 sont longues d'environ vingt centimètres.

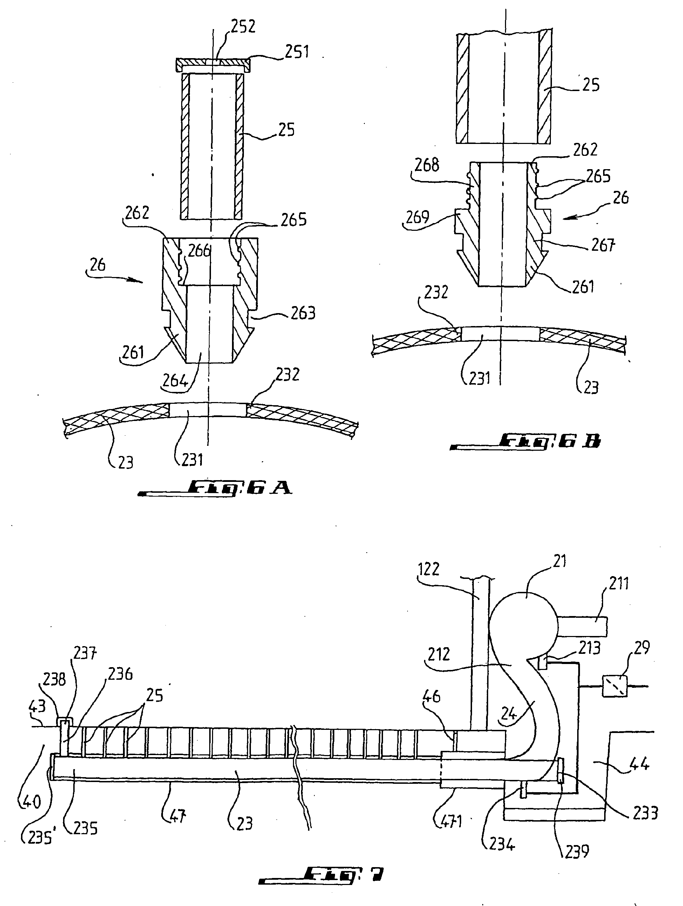

Comme le montre les figures 6A et 6B, chaque dispositif de clipsage 26 présente la forme d'un segment tubulaire, comprenant à une première extrémité 261 une rainure périphérique extérieure 263 dans laquelle vient s'engager un bord périphérique 232 de l'orifice 231 dans lequel débouche la pipette 25, cette pipette 25 étant emmanchée à force sur une seconde extrémité 262 du dispositif de clipsage 26 opposée à la première.

La première extrémité 261 du dispositif de clipsage 26 présente un bord libre coupé, facilitant la mise en place du dispositif de clipsage dans l'orifice 231.

La pipette 25 peut être emmanchée à l'intérieur de la seconde extrémité 262 du dispositif de clipsage 26, comme représenté sur la figure 6A, ou à l'extérieur de cette seconde extrémité, comme représenté sur la figure 6B.

Dans le premier cas, représenté sur la figure 6A, le dispositif de clipsage 26 présente une lumière intérieure 264 représentée sur la figure 6A, comprenant une première partie tubulaire du côté de la première extrémité 261 de taille correspondante au diamètre intérieur de la pipette 25, et une seconde partie tubulaire plus large que la première à la seconde extrémité 262 du dispositif de clipsage, cette seconde partie formant un logement de réception de la pipette 25. Cette seconde partie porte des nervures périphériques 265 bloquant la pipette 25 en position quand celle-ci est engagée dans le dispositif de clipsage 26, et présente un fond axial en anneau 266 contre lequel la pipette 25 vient en butée. Ce fond en anneau 266 est percé en son centre par une extrémité de la première partie tubulaire.

Dans le second cas, représenté sur la figure 6B, le dispositif de clipsage 26 comprend une première partie axiale 267 du côté de la première extrémité 261, et une seconde partie axiale 268 du côté de la seconde extrémité 262 de diamètre extérieur plus petit que la première partie axiale et séparée de celle-ci par un épaulement 269. Le diamètre extérieur de la seconde partie axiale 268 correspond au diamètre intérieur de la pipette 25. La seconde partie axiale 268 porte des nervures périphériques 265. La pipette 25 s'emmanche autour de la seconde partie axiale 268 et vient en butée contre l'épaulement 269, les nervures 265 bloquant la pipette 25 en position.

Chaque pipette 25 porte à son extrémité débouchant sur la face libre 43 du radier 40 un bouchon 251, présentant en son centre un trou 252. Le bouchon est emmanché à force à l'extrémité de la pipette.

Des essais ont montré que l'aération des matériaux organiques est optimale quand les deux conditions suivantes sont vérifiées.

Il faut d'abord que la surface de l'orifice 231 soit supérieure à trois fois la surface du trou 252 du bouchon 251.

Il faut également que la section droite du tronçon percé 23 soit de surface supérieure à la somme des surfaces des trous 252 de toutes les pipettes 25 débouchant dans ledit tronçon percé. On peut ainsi créer une pression uniforme en insufflation d'air (soufflage) dans le tronçon percé, transformant celui-ci en chambre de pression, et obtenir des débits d'air identiques dans toutes les pipettes.

Ce mode de fixation des pipettes sur le tronçon percé est particulièrement avantageux car il est simple et rapide, et qu'il ne nécessite pas de filetage sur les pipettes. Par ailleurs, il est très facile pour le fournisseur des pipettes d'adapter celles-ci en longueur en fonction de l'épaisseur du radier. Les pipettes sont en effet de simples tubes droits en matière plastique, qu'il suffit de découper aux bonnes dimensions.

Comme le montre la figure 7, le radier 40 comprend des réservations tubulaires 47 perpendiculaires au caniveau 44 dans lesquelles passent les canalisations de ventilation 23, chaque réservation tubulaire 47 débouchant dans le caniveau 44 et étant pentée vers ledit caniveau.

Le radier 40 comprend également une pluralité d'orifices d'évacuation des lixiviats 46 répartis le long du caniveau 44, en bas de la partie pentée 45 du radier 44. Plus précisément, le radier comprend un orifice d'évacuation 46 gravitaire des lixiviats associé à chaque tronçon noyé 23 et réservation tubulaire 47, cet orifice d'évacuation étant situé au bout de la ligne formée par les extrémités des pipettes 25 débouchant sur la face libre 43 du radier.

Comme le montre la figure 1, on trouve dans chaque cellule 10 au moins un orifice d'évacuation 46, proche de la cloison transversale 122 portant le ventilateur 21, et situé du côté intérieur de la cellule.

Ces orifices d'évacuation 46 débouchent *dans une extrémité* 471 *évasée* de la réservation tubulaire 47 dans laquelle s'étend la canalisation aéraulique 23 associée à ladite réservation tubulaire.

*L'orifice 46 peut être constitué d'une pipette 25 du type décrit ci-dessus, la pipette* 25 pouvant être clipsée à ladite réservation tubulaire 47 grâce aux mêmes systèmes de clipsage 26 utilisés pour l'utilisation des pipettes aérauliques 25.

Le lixiviat résultant de la fermentation des matériaux organiques coule donc vers le bas de la pente du radier, et s'écoule par l'orifice d'évacuation, d'abord dans la réservation tubulaire 47, puis dans le caniveau 44 grâce à cette pipette à lixiviat 46.

Par ailleurs, chaque tronçon percés 23 est penté en direction d'une première extrémité 233, cette première extrémité étant située dans le caniveau 44 et étant munie d'une vanne de vidange des lixiviats 234 et d'un bouchon vissable ou amovible 239.

Ainsi, les lixiviats qui s'écoulent par les pipettes 25 dans les tronçons aérauliques percés s'accumulent aux premières extrémités 233 et peuvent être repris et évacués.

Par ailleurs, chaque ventilateur 21 comprend un point bas muni d'une vanne de vidange des condensats 213.

De préférence, les vannes de vidange des lixiviats et des condensats 234 et 213 sont des vannes à membranes ou manchon, manuelles ou commandées par un dispositif de commande à air comprimé.

Le dispositif automatique de commande des vannes à membranes ou manchon comprend une électrovanne 29 pour chaque ventilateur 21. Cette électrovanne 29 commande la vanne de vidange des condensats 213 du ventilateur 21 et la ou les vannes de vidanges des lixiviats 234 du ou des tronçons percés associés au ventilateur 21. L'électrovanne 29 peut adopter une position ouverte dans laquelle les vannes de vidange des lixiviats et des condensats 234 et 213 sont alimentées en air comprimé et sont en positions fermées, et une position fermée dans laquelle les vannes de vidange des lixiviats et des condensats 234 et 213 ne sont pas alimentées en air comprimé et sont en positions ouvertes.

L'électrovanne 29 adopte sa position ouverte quand le ventilateur 21 fonctionne et sa position fermée quand le ventilateur 21 ne fonctionne pas.

Les vannes de vidange des lixiviats et des condensats 234 et 213 peuvent être par exemple reliées à un dispositif de pompage de liquide permettant d'évacuer automatiquement lixiviats et condensats. Ce dispositif de pompage peut être pneumatique.

Chaque tronçon percé 23 présente, une seconde extrémité 235 opposée à la première extrémité 233, *munie d*'*un tube 236* débouchant sur la face libre 43 du radier par une extrémité filetée 237. Un bouchon 238 est vissé de façon amovible sur cette extrémité filetée 237. Ce bouchon 238 peut être retiré et le tube 236 peut être connecté à un dispositif d'injection d'eau de rinçage du tronçon percé.

Le tronçon noyé 23 est bouché à sa seconde extrémité 235 par un bouchon étanche 235'.

Ainsi, aucune des extrémités 233 et 235 ne comporte de siphon du fait de la présence des vannes de reprise des lixiviats et condensats 213 et 234.

L'air soufflé à travers les matériaux organiques 1 passe après avoir quitté la cellule 10 dans le filtre biologique 50.

Ce filtre biologique 50 est réalisé de la même façon que les cellules 10, et comprend une dalle de fond 51 constituée par le radier 40, des réservations 42 et des cloisons 52 et en option une toiture 53 de même types que celles des cellules 10 avec leur toit 16. L'espace ainsi délimité est partiellement rempli d'un mélange de tourbe, de compost, d'écorces et d'autres matériaux absorbants, constituant le média filtrant.

De préférence, les cellules 10 présentent une cloison commune avec le filtre biologique 50, l'air circulant de chaque cellule vers le filtre à travers une ouverture réalisée de façon très simple, en retirant un élément de bardage 14 de la cloison commune.

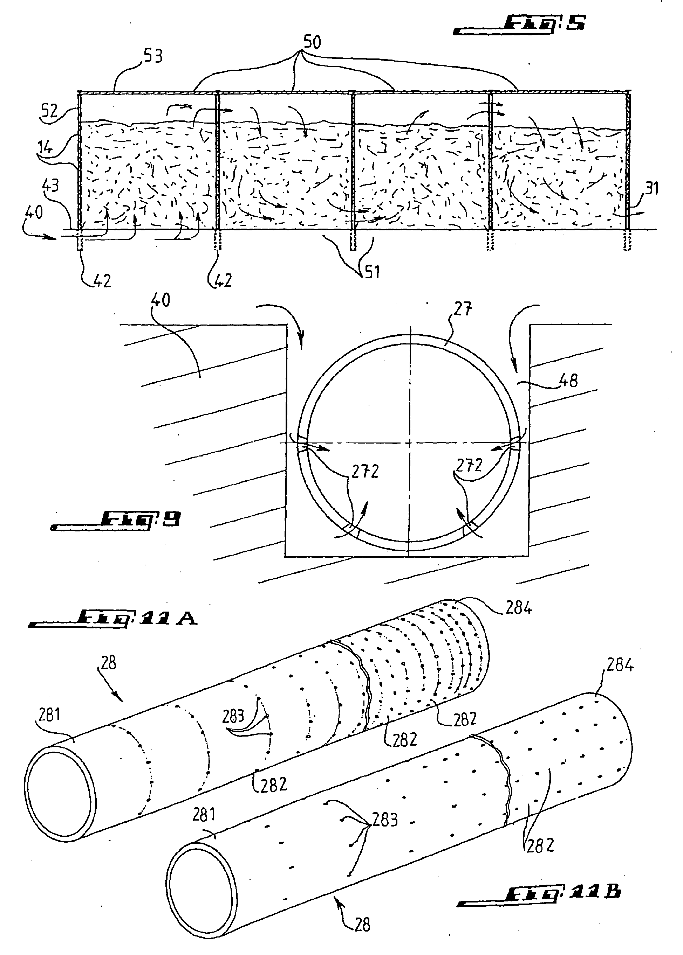

Il est possible de cette façon de réaliser des dispositifs de bio-filtration déjà économiques et à plusieurs étages, en disposant côte à côte sur le radier 40 plusieurs filtres biologiques 50 construits de la façon décrite ci-dessus comme représenté sur la figure 5.

Les cellules 10 et les filtres 50 présentent alors des cloisons communes.

Concernant les filtres 50 présentant aussi des cloisons communes, des sorties sont créées en retirant un élément de bardage 14 de chaque cloison commune, l'air passant d'un filtre à un autre à travers l'espace des bardages qui ont été ôtés.

L'entrée et la sortie d'air d'un même filtre sont situés l'un en bas d'une cloison et l'autre en haut d'une cloison, de façon à forcer l'air à passer à travers le média filtrant.

Si nécessaire, il est possible d'ajouter au dispositif d'aération un étage supplémentaire de désodorisation de l'air, comme un premier étage de barbotage dans une solution adaptée et/ou un second étage de piégeage moléculaire des molécules malodorantes, juste avant ou juste après le filtre biologique ou dans un ou plusieurs filtres biologiques.

Dans ce premier mode de réalisation, les entrées d'air sont les orifices d'aspiration 211 des ventilateurs 21, et les sorties d'air 31 sont crées en retirant un élément de bandage 14 d'une cloison 52 de chaque filtre biologique.

On va maintenant décrire un second mode de réalisation de l'invention correspondant à une installation de compostage fonctionnant en aspiration. Seuls les aspects qui diffèrent de l'installation fonctionnant en soufflage seront décrits, les éléments identiques ou jouant le même rôle dans les deux cas gardant les mêmes références.

Dans une première variante de réalisation représentée sur la figure 8, le radier 40 comprend une pluralité de caniveaux secondaires 48 mutuellement parallèles, s'étendant perpendiculairement au caniveau 44 et débouchant chacun dans celui-ci par des extrémités respectives.

Ces caniveaux secondaires 48 s'étendent dans des plans médians des rangées de réservations 42. Chaque cellule 10 est ainsi traversée par au moins un caniveau secondaire 48.

Le dispositif d'aération 20 comprend pour chaque cellule 10 de l'installation au moins un tronçon percé 27 de conduit de ventilation s'étendant le long du caniveau secondaire 48 traversant la cellule 10, ce tronçon percé présentant une première extrémité 271 reliée à l'orifice d'aspiration 211 d'un ventilateur 21 et une seconde extrémité bouchée 273 opposée à la première extrémité.

Chaque tronçon percé 27 présente une pluralité de sections percées, chacune percée de trous 272 répartis le long de la périphérie de ladite section.

Les trous 272 situés dans une moitié inférieure d'une section percée sont en nombre plus grand et/ou sont de diamètres plus grands que les trous 272 situés dans une moitié supérieure de ladite section, comme le montre la figure 9.

Cette caractéristique permet d'améliorer l'aération des matériaux organiques, les trous de la moitié inférieure étant moins susceptibles d'être obturés et colmatés par les matériaux organiques que les trous de la moitié supérieure.

Dans une seconde variante de réalisation représentée sur la figure 10, le radier ne comprend pas de caniveaux secondaires, et le dispositif d'aération 20 comprend pour chaque cellule 10 un tronçon percé 28 de conduit de ventilation disposé directement sur la surface libre du radier et s'étendant sensiblement dans la même position que le tronçon percé correspondant de la première variante.

De même que précédemment, ce tronçon percé 28 présente une première extrémité 281 reliée à l'orifice d'aspiration 211 d'un ventilateur 21 et une seconde extrémité bouchée 284 opposée à la première extrémité.

Ce tronçon percé 28 présente une pluralité de sections 282 percées de trous 283, le nombre de trous 283 par unité de longueur du tronçon percé augmentant progressivement le long du tronçon percé 28, et étant minimum à la première extrémité 281 et maximum à la seconde extrémité 284, ou, pour un même nombre de trous par section, l'espacement des sections se réduisant au fur et à mesure que l'on se rapproche de la seconde extrémité 284.

Cette caractéristique permet d'avoir *des trous* de même diamètre quelle que soit la longueur du tuyau de ventilation et d'avoir un débit d'air aspiré par unité de longueur identique tout au long du tronçon, indépendant de l'éloignement par rapport à l'entrée du tronçon percé.

Dans ce second mode de réalisation, les entrées d'air 30 sont créées en retirant un élément de bardage 14 d'une cloison 12 de chaque cellule 10, et les sorties d'air sont créées en retirant un élément de bardage d'une cloison 52 de chaque filtre biologiquement 50.

Le soufflage d'air dans chaque filtre biologique 50 se fait par un tuyau percé du même type que ceux servant à l'aspiration dans les cellules 10.

Dans ce mode de réalisation avec des entrées d'air dans les cellules de fermentation ou sorties d'air des biofiltres par des aménagements dans les cloisons, il va de soi que ces cellules de fermentation ou celles des biofiltres comportent un toit 16 obligeant l'air aspiré ou refoulé à passer par le sas d'alimentation ou d'évacuation de l'air.

En l'absence d'aménagement dans les cloisons des cellules, les cellules sont alors mises en place sous les toits et l'aspiration de l'air se fait directement avec l'extérieur.

On notera que dans tous les modes de réalisation, l'insertion des vannes à manchon ou à membrane de reprise manuelle ou automatisée des lixiviats, permet de supprimer à chacune des extrémités des canalisations aérauliques les siphons aérauliques.

Les orifices d'évacuation des lixiviats 46, dans le second mode de réalisation, débouchent directement dans le caniveau 44. Ils ne sont pas représentés sur les figures 8 et 10. Les lixiviats passent en effet sous les bardages des cloisons 122 ou par les réservations 48.

On notera que dans les deux modes de réalisation décrits ci-dessus, et bien sûr quand les cellules sont fermées par un toit, installation fonctionnant en soufflage et installation fonctionnant en aspiration, le dispositif d'aération 20 comprend des clapets de ventilation 32 obturant la ou les entrées d'air 30 et la ou les sorties d'air 31 quand le ou les ventilateurs sont à l'arrêt, empêchant l'air de s'échapper lorsque les cellules sont mises en pression ou dépression.

Pour les entrées et sorties d'air 30 et 31 créées en retirant un élément de bardage d'une cloison, les clapets 32 sont de simples volets pivotants montés sur les cloisons.

Ces clapets 32 s'ouvrent et se ferment sous l'effet de la différence de pression entre l'intérieur des cellules ou des filtres et l'extérieur.

Ces clapets permettent d'éviter que des odeurs se répandent autour de l'installation pendant que celle-ci est à l'arrêt.

Enfin, il est important de souligner que l'installation décrite ci-dessus permet d'aménager des cellules de différentes tailles, de différentes formes, pouvant contenir différents types de matériaux de fermentation ou biofiltration et s'étendant dans différentes positions par rapport au caniveau 44, et permettant le moment venu de recouvrir l'utilisation éventuelle et complète de la dalle grâce au retrait et à la dépose de tout ou partie des équipements, poteaux et bardages amovibles mis en place.

Il est également important de souligner que toute plate-forme équipée selon les principes de l'invention peut être fournie sous la forme d'un toit de montage constituée, en premier lieu, des réservations 42 et des poteaux de bardages pouvant être directement fournis aux entreprises de voirie réseaux divers, et qu'il est possible en dehors de la dalle, d'éviter l'utilisation coûteuse des bétons.

Enfin on soulignera que l'invention permet aussi avec les mêmes équipements de concevoir à la fois des cellules de fermentation et des biofiltres et de pouvoir juxtaposer ces équipements côte à côte en réduisant systématiquement le nombre de cloisons.

## Revendications

1. Installation de compostage de matériaux organiques (1), comprenant un ensemble de cellules (10) dans lesquelles les matériaux organiques (1) sont entreposés pour fermentation et un dispositif d'aération (20) soufflant ou aspirant de l'air à travers les matériaux organiques (1) entreposés dans les cellules (10), chaque cellule (10) comprenant une dalle de fond (11) et des cloisons (12), chaque cloison (12) comprenant une pluralité de poteaux (13) répartis le long de la cloison (12) et des éléments de bardage (14) fixés de façon amovible sur ces poteaux (13), l'espace entre deux poteaux (13) adjacents étant obturé par les éléments de bardages (14) s'étendant entre lesdits poteaux (13),le dispositif d'aération (20) comprenant au moins un organe de ventilation (21) muni d'un orifice d'aspiration (211) et d'un orifice de refoulement (212), et un conduit de ventilation (22) le conduit de ventilation comportant des tronçons percés (23) recevant une pluralité de pipettes (25) débouchant chacune par une extrémité inférieure dans un orifice (231) porté par le tronçon percé (23) et par une extrémité supérieure sur une face libre (43) d'un radier (40), le conduit de ventilation reliant l'orifice d'aspiration (211) ou l'orifice de refoulement (212) à une ou plusieurs cellules (10), **caractérisée en ce qu'**elle comprend un radier (40) constituant les dalles de fond (11) de différentes cellules (10), ce radier (40) comprenant des moyens (41) pour disposer d'une manière amovible les cloisons (12) des cellules (10) à différentes positions prédéterminées, la taille des cellules (10) étant de ce fait modulable en fonction des besoins, les moyens (41) pour disposer d'une manière amovible les cloisons (12) des cellules (10) comprenant des réservations (42) de poteaux ménagées dans le radier (40), et les poteaux (13) étant configurés pour s'engager de façon amovible par leurs extrémités inférieures respectives, chacun dans une desdites réservations (42) de poteaux du radier (40),
et **en ce que** les pipettes sont clipsées sur le tronçon percé (23) par des dispositifs de clipsage (26) et que chaque dispositif de clipsage (26) présente la forme d'un segment tubulaire comprenant à une première extrémité (261) une rainure périphérique extérieure (262) dans laquelle vient s'engager un bord périphérique (232) de l'orifice (231) dans lequel débouche la pipette (25), cette pipette (25) étant emmanchée à force sur une seconde extrémité (262) du dispositif de clipsage (26) opposée à la première.

2. Installation selon la revendication 1, **caractérisée en ce que** la cellule (10) comprend deux cloisons (12) parallèles et opposées présentant chacune un bord longitudinal supérieur (123), ces cloisons opposées (12) comprenant des poteaux longitudinaux (15) s'étendant le long de leurs bords longitudinaux supérieurs (123) respectifs, ces poteaux longitudinaux (15) comprenant des rainures longitudinales (151) respectives en vis à vis, des éléments de toitures (16) étant engagés par des bords opposés dans les rainures (151) en vis à vis des deux poteaux longitudinaux (15).

3. Installation selon la revendication 1 ou 2, **caractérisée en ce que** deux poteaux (13) adjacents d'une même cloison (12) comprennent des rainures longitudinales (131) respectives en vis à vis, les éléments de bardage (14) obturant l'espace entre les deux poteaux (13) adjacents présentant des bords opposés engagés dans les deux rainures (131) en vis à vis.

4. Installation selon l'une quelconque des revendications 1 à 3, **caractérisée en ce que** le radier (40) comprend un caniveau (44) et présente une partie pentée (45) en direction de ce caniveau (44).

5. Installation suivant la revendication 4, **caractérisée en ce que** les réservations (42) de poteaux sont disposées en plusieurs rangées parallèles perpendiculaires au caniveau (44), le conduit de ventilation (22) comprenant des tronçons percés (23,27, 28) s'étendant dans les plans médians desdites rangées parallèles, et pentés en direction de premières extrémités respectives (233, 271, 281) situées dans le caniveau (44), ces premières extrémités étant munies de vannes de vidange (234) des lixiviats.

6. Installation selon l'une quelconque des revendications précédentes, **caractérisée en ce que** l'organe de ventilation (21) comprend un point bas muni d'une vanne de vidange (213) des condensats.

7. Installation selon la revendication 5 combinée avec la revendication 6, **caractérisée en ce que** les vannes de vidange des lixiviats et/ou des condensats (234,213) sont des vannes à membranes ou à manchon commandées par un dispositif de commande à air comprimé.

8. Installation selon la revendication 7, **caractérisée en ce que** le dispositif de commande des vannes de vidange des lixiviats et des condensats (234,213) comprend une électrovanne (29) pouvant adopter une position ouverte dans laquelle les vannes de vidange (234,213) sont alimentées en air comprimé et sont en positions fermées, et une position fermée dans laquelle les vannes de vidange (234,213) ne sont pas alimentées en air comprimé et sont en positions ouvertes, l'électrovanne (29) adoptant sa position ouverte quand l'organe de ventilation (21) fonctionne et sa position fermée quand *l'organe de ventilation* (21) ne fonctionne pas.

9. Installation selon l'une quelconque des revendications précédentes combinée avec la revendication 7, **caractérisée en ce que** chaque tronçon percé du conduit de ventilation (29 : 27 ; 26) présente deux extrémités *opposées (233, 235 ; 271, 273 ; 287, 284)* munies chacune d'un bouchon vissable ou amovible et chacune dépourvues de siphon aéraulique, y compris pour les dispositifs d'aération fonctionnant en aspiration.

10. Installation selon l'une quelconque des revendications précédentes, **caractérisée en ce que** chaque tronçon percé (23) du conduit de ventilation (22) est noyé dans le radier (40).

11. Installation selon l'une quelconque des revendications précédentes, **caractérisée en ce que** le radier (40) comprend une réservation tubulaire (47) traversée par le conduit de ventilation (22), cette réservation tubulaire (47) débouchant directement dans dans le caniveau (44), au moins un des orifices d'évacuation gravitaire des lixiviats (46) débouchant directement dans la réservation tubulaire (47).

12. Installation selon l'une quelconque des revendications précédentes combinée avec la revendication 5, **caractérisée en ce que** chaque tronçon percé (23) du conduit de ventilation (22) présente une seconde extrémité (235) opposée à la première munie d'un tube (236) débouchant sur la face libre (43) du radier (40) par une extrémité (237), cette extrémité (237) étant bouchée par un bouchon (238) amovible ou vissable, et pouvant être connectée à un dispositif d'injection d'eau de rinçage du tronçon percé (23) ; l'autre extrémité (233) étant elle-même équipée d'un bouchon vissable ou amovible (239).

13. Installation selon l'une quelconque des revendications 1 à 11 combinée avec la revendication 5, **caractérisée en ce que** chaque tronçon percé (28) du conduit de ventilation (22) est disposé à la surface du radier (40), sa première extrémité (281) étant reliée à l'orifice d'aspiration (211) de l'organe de ventilation (21), ce tronçon percé (28) étant percé d'une pluralité de trous (283), le nombre de trous (283) par unité de longueur du tronçon percé (28) augmentant progressivement le long du tronçon percé (28), et étant minimum à la première extrémité (281) et maximum à une seconde extrémité (284) dudit tronçon opposée à la première.

14. Installation selon l'une quelconque des revendications 1 à 10 combinée avec la revendication 5, **caractérisée en ce que** chaque tronçon percé (28) du conduit de ventilation (22) est disposé à la surface du radier (40), sa première extrémité (281) étant reliée à l'orifice d'aspiration (211) de l'organe de ventilation (21), le tronçon percé (28) présentant une pluralité de sections (282) percées de trous (283), l'espacement des sections de trous (283) se réduisant progressivement le long du tronçon percé (28) et étant minimum à la seconde extrémité (284) dudit tronçon opposé à la première.

15. Installation selon l'une quelconque des revendications 1 à 10 combinée à la revendication5, **caractérisée en ce que** le radier (40) comprend des caniveaux secondaires (48), chaque tronçon percé (27) du conduit de ventilation (22) s'étendant le long d'un caniveau secondaire (48), et leurs premières extrémités (271) étant reliées à l'orifice d'aspiration (271) de *l'organe de ventilation* (21), chaque tronçon percé (27) présentant une pluralité de sections chacune percée de trous (272) répartis le long de la périphérie de ladite section, les trous (272) situés dans une moitié inférieure d'une section étant en nombre plus grand et/ou de diamètres plus grands que les trous (272) situés dans une moitié supérieure de ladite section.

16. Installation selon l'une quelconque des revendications précédentes, **caractérisée en ce que** le dispositif d'aération (20) comprend une entrée d'air (30) venant de l'extérieur de l'installation, une sortie d'air (31) vers l'extérieur de l'installation, et un ou plusieurs clapets de ventilation (32) obturant l'entrée d'air (30) et/ou la sortie d'air (31) quand *l'organe de ventilation* (21) est à l'arrêt.

17. Installation selon l'une quelconque des revendications précédentes, **caractérisée en ce que** l'air soufflé ou aspiré à travers les matériaux organiques (1) passe dans un filtre biologique (50) après avoir quitté la cellule (10), ce filtre biologique (50) comprenant une dalle de fond (51) constituée par le radier (40), des réservations (42), des cloisons (52) et des poteaux amovibles (13) du même type que celles des cellules (10).

18. Installation selon l'une des revendications précédentes, **caractérisée en ce que** chaque réservation de poteau libre (42) peut être obturée par un bouchon amoviblement fixé par visage ou par clipsage.

## Claims

1. An installation for composting organic material (1), comprising an assembly of cells (10) in which the organic material (1) is for fermentation and a ventilation device (20) blowing or drawing in air through the organic material (1) stored in the cells (10), each cell (10) comprising a base slab (11) and partition walls (12), each partition wall (12) comprising several poles (13) spread out along the wall (12) and sliding elements (14) removably secured to the poles (13), the space between two adjacent poles (13) being filled by the siding elements (14) stretching between the said poles (13), the ventilation device (20) comprising at least one ventilation meant (21) fitted with a suction port (211) and a discharge port (212), and a ventilation duct (22), the ventilation duct having perforated pipe runs (23) receiving several airflow tubes (25) each terminating at its lower end in an opening (231) in the perforated pipe run (23) and at its upper end on a free face (43) of an apron (40), the ventilation duct connecting the suction port (211) or the discharge port (212) to one or more cells (10) **characterized in that** it comprises an apron (40) forming the base slabs (11) of different cells (10), the apron (40) comprising means (41) for installing in a removable manner the partition walls (12) of the cells (10) at different predetermined positions, allowing the size of the cells (10) to be modified in relation to needs, the means (41) for installing in a removable manner the partition walls (12) of the cells (10) comprising pole reserves (42) made in the apron (40), and the poles (13) being arranged to removably engage at their respective lower ends, each in one of said pole reserves (42) of the apron (40), and **in that** the airflow tubes are clipped into the perforated pipe run (23) by clip-in fasteners (26) and that each clip-in fastener (26) has the form of a tubular segment having at a first end (261) an outer peripheral groove (262) in which is inserted a peripheral edge (232) of the opening (231) in which the airflow tube (25) terminates, the said airflow tube (25) being force-fitted to a second end (262) of the clip-in fastener (26) opposite the first end.

2. An installation in accordance with claim 1, **characterized in that** the cell (10) has two parallel and opposite walls (12) each having an upper lengthwise edge (123), the said opposite walls (12) having lengthwise poles (15) lying along their respective upper lengthwise edges (123), the said lengthwise poles (15) having lengthwise grooves (151) facing each other, roof elements (16) being inserted at opposite edges in the opposite grooves (151) of the two lengthwise poles (15).

3. An installation in accordance with claim 1 or 2, **characterized in that** two adjacent poles (13) belonging to the same wall (12) comprise respective lengthwise grooves (131) facing each other, the sliding elements (14) filling the space between two adjacent poles (13) having opposite edges inserted in the two grooves (131) faring each other.

4. An installation in accordance with any one of claims 1 to 3, **characterized in that** the apron (40) has trough (44) and a portion (45) slanted towards the trough (44).

5. An installation in accordance with claim 4, **characterized in that** the reserves (42) are arranged in several parallel rows, perpendicular to the trough (44), the ventilation duct (22) having perforated pipe runs (23, 27, 28) lying in the median planes of the said parallel rows, and slanted towards the respective first ends (233, 271, 281) located in the trough (44), the said first ends being fitted with lixiviate drain valves (234).

6. An installation in accordance with any one of the preceding claims, **characterized in that** the ventilation means (21) has a low point fitted with a condensate drain valve (213).

7. An installation in accordance with claim 5 combined with claim 6, **characterized in that** the valves (234, 213) for draining the lixiviates and/or condensates are diaphragm or sleeve valves actuated by a compressed air control system.

8. An installation in accordance with claim 7, **characterized in that** the system for actuating the lixiviate and condensate drain valves (234, 213) has an electric value (29) having an open position in which the drain valves (234, 213) are supplied with compressed air and are in the closed position, and a closed position in which the drain values (234, 213) are not supplied with compressed air and are in the open position, the electric valve (29) being in its open position when the ventilation means (21) is operating and in its closed position when the ventilation means (21) is not operating.

9. An installation in accordance with any one of the preceding claims combined with claim 7, **characterized in that** each perforated pipe run of the ventilation duct (29; 27; 26) has two opposite ends (233, 235; 271, 273; 281, 284) each fitted with a screw-in or removable plug and each not fitted with an airflow siphon, including the case of ventilation devices operating by suction.

10. An installation in accordance with any one of the preceding claims, **characterized in that** each perforated pipe run (23) of the ventilation duct (22) is embedded in the apron (40).

11. An installation in accordance with any one of the preceding claims, **characterized in that** the apron (40) has a tubular reserve (47) traversed by the ventilation duct (22), this tubular reserve (47) terminating directly in the trough (44), at least one of the lixiviate gravity drain holes (46) terminating directly in the tubular reserve (47).

12. An installation in accordance with any one of the preceding claims combined with claim 5, **characterized in that** each perforated pipe run (23) of the ventilation duct (22) has a second end (235), opposite the first end, fitted with a tube (236) terminating at the free face (43) of the apron (40) at a first end (237), said first end (237) being closed by a removable or screw-on cap (238), and adapted to be connected to a water injection system for rinsing out the perforated pipe run (23), a second end (233) being itself fitted with a screw-in or removable plug (239).

13. An installation in accordance with any one of claims 1 to 11 combine with claim 5, **characterized in that** each perforated pipe run (28) of the ventilation duct (22) is laid on the surface of the apron (40), its first end (281) being connected to the suction port (211) of the ventilation means (21), the said perforated pipe run (28) being perforated with several holes (283), the number of holds (283) per unit of length of the perforated pipe run (28) increasing gradually along the perforated pipe run (28), being at a minimum at the first end (281) and at the maximum at a second end (284) of the said pipe run opposite the first end.

14. An installation in accordance with any one of claims 1 to 10 combined with claim 5, **characterized in that** each perforated pipe run (28) of the ventilation duct (22) is laid on the surface of the apron (40), its first end (281) being connected to the suction port (211) of the ventilation means (21), the perforated pipe run (28) having several cross-sections (282) perforated with holes (283), the spacing between the cross-sections with holes (283) diminishing gradually along the perforated pipe run (28) diminishing gradually along the perforated pipe run (28) and being at a minimum at the second end (284) of the said pipe run opposite the first end.

15. An installation in accordance with any one of claims 1 to 10 combined with claim 5, **characterized in that** the apron (40) has secondary troughs (48), each perforated pipe run (27) of the ventilation duct (22) lying along a secondary trough (48), and its first end (271) being connected to the suction port (211) of the ventilation means (21), each perforated pipe run (27) having several cross-sections each perforated with holes (272) spread out along the periphery of the said cross-section, the holes (272) located in the lower half of a cross-section being greater in number and/or greater in diameter than the holes (272) located in the upper half of the said cross-section.

16. An installation in accordance with any of the preceding claims, **characterized in that** the ventilation device (20) comprises an inlet (30) for air combing from the outside of the installation, an outlet (31) for air going to the outside of the installation, and one or more ventilation flaps (32) covering over the air inlet (30) and/or the air outlet (31) when the ventilation means (21) is turned off.

17. An installation in accordance with any one of the preceding claims, **characterized in that** the air blown or drawn in through the organic material (1) passes through a biological filter (50) after coming out of the cell (10), the biological filter (50) comprising a base slab (51) composed of an apron (40), reserves (42), partition walls (52) and removable poles (13) of the same type as those of the cells (10).

18. An installation in accordance with any one of the preceding claims, **characterized in that** each free pole reserve (42) can be covered over with a removable screw-in or clip-in plug.

## Patentansprüche

1. Kompostanlage für organische Stoffe (1), umfassend eine Anordnung von Zellen (10), in denen die organischen Stoffe (1) zur Gärung zwischengelagert sind, und eine Belüftungsvorrichtung (20), die Luft durch die organischen Stoffe (1), die in den Zellen (10) zwischengelagert sind, einbläst oder absaugt, wobei jede Zelle (10) eine Bodenplatte (11) und Trennwände (12) umfaßt, wobei jede Trennwand (12) mehreren Stützen (13) aufweist, die entlang der Trennwand (12) verteilt sind, und Wandverkleidungselemente (14), die abnehmbar an diesen Stützen (13) befestigt sind, wobei der Raum zwischen zwei benachbarten Stützen (13) durch die Wandverkleidungselemente (14) ausgefüllt ist, die sich zwischen den Stützen (13) erstrecken, wobei die Belüftungsvorrichtung (20) mindestens ein Belüftungsorgan (21), das mit einer Ansaugöffnung (211) und einer Austrittsöffnung (212) versehen ist, und ein Belüftungsrohr (22) umfasst, wobei das Belüftungsrohr gelochte Abschnitte (23) umfasst, die mehrere Pipetten (25) aufnehmen, die jeweils durch ein unteres Ende in eine Öffnung (231), die in dem gelochten Abschnitt (23) angeordnet ist, und durch ein oberes Ende auf eine freie Fläche (43) einer Sohle (40) münden, wobei das Belüftungsrohr die Ansaugöffnung (211) oder die Austrittsöffnung (212) mit einer oder mehreren Zellen (10) verbindet, **dadurch gekennzeichnet, dass** sie eine Sohle (40) aufweist, die die Bodenplatten (11) von verschiedenen Zellen (10) bildet, wobei diese Sohle (40) Mittel (41) umfasst, um die Trennwände (12) der Zellen (10) abnehmbar an verschiedenen vorgegebenen Positionen anzuordnen, wobei die Größe der Zellen (10) aus diesem Grund entsprechend den Bedürfnissen variierbar ist, wobei die Mittel (41), um die Trennwände (12) der Zellen (10) abnehmbar anzuordnen, Aussparungen (42) von Stützen aufweisen, die in der Sohle (40) angeordnet sind und wobei die Stützen (13) so angeordnet sind, dass sie jeweils abnehmbar durch ihre jeweiligen unteren Enden in einer der Aussparungen (42) der Stützen der Sohle (40) in Eingriff stehen,
und dass die Pipetten durch Klemmvorrichtungen (26) auf den gelochten Abschnitt (23) geklemmt sind und dass jede Klemmvorrichtung (26) die Form eines röhrenförmigen Segments aufweist, das an einem ersten Ende (261) eine äußere umlaufende Nut (262) aufweist, in welche eine umlaufende Kante (232) der öffnung (231) eingreift, in welche die Pipette (25) mündet, wobei diese Pipette (25) mit Kraft an einem zweiten Ende (262) der Klemmvorrichtung (26), die sich gegenüber der ersten befindet, eingesetzt wird.

2. Anlage nach Anspruch 1, **dadurch gekennzeichnet, dass** die Zelle (10) zwei parallele und gegenüberliegende Trennwände (12) aufweist, die jeweils eine obere Längskante (123) aufweisen, wobei diese gegenüberliegenden Trennwände (12) Längsstützen (15) umfassen, die sich entlang ihrer jeweiligen oberen Längskanten (123) erstrecken, wobei diese Längsstützen (15) jeweils gegenüberliegende Längsnuten (151) umfassen, wobei Dachelemente (16) durch gegenüberliegende Kanten mit den Nuten (151) gegenüber der Längsstützen (15) in Eingriff stehen.

3. Anlage nach Anspruch 1 oder 2, **dadurch gekennzeichnet, dass** zwei benachbarte Stützen (13) ein- und derselben Trennwand (12) jeweils gegenüberliegende Längsnuten (131) umfassen, wobei die Wandverkleidungselemente (14), die den Raum zwischen den beiden benachbarten Stützen (13) ausfüllen, gegenüberliegende Kanten aufweisen, die mit den beiden gegenüberliegenden Nuten (131) in Eingriff stehen.

4. Anlage nach einem der Ansprüche 1 bis 3, **dadurch gekennzeichnet, dass** die Sohle (40) eine Rinne (44) umfasst und einen in Richtung dieser Rinne (44) geneigten Teil (45) aufweist.

5. Anlage nach Anspruch 4, **dadurch gekennzeichnet, dass** die Aussparungen (42) der Stützen in mehreren parallelen Reihen angeordnet sind, die senkrecht zu der Rinne (44) verlaufen, wobei das Belüftungsrohr (22) gelochte Abschnitte (23, 27, 28) umfasst, die sich in Mittelebene der parallelen Reihen erstrecken, sowie Schrägen in Richtung von jeweils ersten Enden (233, 271, 281), die sich in der Rinne (44) befinden, wobei diese ersten Enden mit Entleerungsventilen (234) für das Sickerwasser versehen sind.

6. Anlage nach einem der vorhergehenden Ansprüche, **dadurch gekennzeichnet, dass** das Belüftungsorgan (21) einen Tiefpunkt umfasst, der mit einem Entleerungsventil (213) Kondensats versehen ist.

7. Anlage nach Anspruch 5 kombiniert mit Anspruch 6, **dadurch gekennzeichnet, dass** die Entleerungsventile des Sickerwassers und/oder des Kondensats (234, 213) Ventile mit Membranen oder mit Muffe sind, die durch eine Druckluft-Steuervorrichtung gesteuert werden.

8. Anlage nach Anspruch 7, **dadurch gekennzeichnet, dass** die Steuervorrichtung der Entleerungsventile für das Sickerwasser und das Kondensat (234, 213) ein Elektroventil (29) umfasst, das eine offene Position annehmen kann, in der die Entleerungsventile (234, 213) mit Druckluft gespeist werden und sich in geschlossener Position befinden, und eine geschlossene Position, in der die Entleerungsventile (234, 213) nicht mit Druckluft gespeist werden und sich in einer offenen Position befinden, wobei das Elektroventil (29) seine offene Position annimmt, wenn das Belüftungsorgan (21) arbeitet, und seine geschlossene Position, wenn das Belüftungsorgan (21) nicht arbeiter.

9. Anlage nach einem der vorhergehenden Ansprüche kombiniert mit Anspruch 7, **dadurch gekennzeichnet, dass** jeder gelochte Abschnitt des Belüftungsrohrs (29; 27; 26) zwei gegenüberliegende Enden (233; 235; 271, 273; 287, 284) aufweist, die jeweils mit einem schraubbaren oder abnehmbaren Stopfen ausgestattet sind und jeweils mit einem lufttechnischen Siphon versehen sind, einschließlich für die Belüftungsvorrichtungen, die als Saugvorrichtungen arbeiten.

10. Anlage nach einem der vorhergehenden Ansprüche, **dadurch gekennzeichnet, dass** jeder gelochte Abschnitt (23) des Belüftungsrohrs (22) in der Sohle (40) eingelassen ist.

11. Anlage nach einem der vorhergehenden Ansprüche, **dadurch gekennzeichnet, dass** die Sohle (40) eine röhrenförmige Aussparung (47) umfasst, die von dem Belüftungsrohr (22) durchquert wird, wobei diese röhrenförmige Aussparung (47) direkt in die Rinne (44) mündet, wobei mindestens eine der Öffnungen zur Entleerung des Sickerwassers mit Gefälle (46) direkt in die röhrenförmige Aussparung (47) mündet.

12. Anlage nach einem der vorhergehenden Ansprüche kombiniert mit Anspruch 5, dadurch gekenntzeichnet, dass jeder gelochte Abschnitt (23) des Belüftungsrohrs (22) ein zweites Ende (235) aufweist, das gegenüber dem ersten angeordnet ist und das mit einem Rohr (236) versehen ist, das durch ein Ende (237) auf die freie Fläche (43) der Sohle (40) mündet, wobei dieses Ende (237) durch einen abnehmbaren oder schraubbaren Stopfen (238) verschlossen ist und mit einer Vorrichtung zur Einspritzung von Spülwasser des gelochten Abschnitts (23) verbunden werden kann; wobei das andere Ende (233) ebenfalls mit einem schraubbaren oder abnehmbaren Stopfen (239) ausgestattet ist.

13. Anlage nach einem der Ansprüche 1 bis 11 kombiniert mit Anspruch 5, **dadurch gekennzeichnet, dass** jeder gelochte Abschnitt (28) des Belüftungsrohrs (22) an der Oberfläche der Sohle (40) angeordnet ist, wobei sein erstes Ende (281) mit der Saugöffnung (211) des Belüftungsorgans (21) verbunden ist, wobei dieser gelochte Abschnitt (28) mit mehreren Löchern (283) durchsetzt ist, wobei die Anzahl der Löcher (283) pro Längeneinheit des gelochten Abschnitts (28) schrittweise entlang des gelochten Abschnitts (28) steigt und das Minimum sich am ersten Ende (281) und das Maximum sich an einem zweiten Ende (284) des Abschnitts, das sich gegenüber dem ersten befindet, befindet.

14. Anlage nach einem der Ansprüche 1 bis 10 kombiniert mit Anspruch 5, dadurch gekenntzeichnet, dass jeder gelochte Abschnitt (28) des Belüftungsrohrs (22) an der Oberfläche der Sohle (40) angeordnet ist, wobei sein erstes Ende (281) mit der Saugöffnung (211) des Belüftungsorgans (21) verbunden ist, wobei der gelochte Abschnitt (28) mehrere Abschnitte (282) aufweist, die mit Löchern (283) versetzt sind, wobei der Abstand der Lochabschnitte (283) schrittweite entlang des gelochten Abschnitts (28) sinkt und das Minimum sich am zweiten Ende (284) des Abschnitts, der sich gegenüber dem ersten befindet, befindet.

15. Anlage nach einem der Ansprüche 1 bis 10 kombiniert mit Anspruch 5, **dadurch gekennzeichnet, dass** die Sohle (40) sekundäre Rinnen (48) umfasst, wobei jeder gelochte Abschnitt (27) des Belüftungsrohrs (22) sich entlang einer sekundären Rinne (48) ersteckt und ihre ersten Enden (271) mit der Saugöffnung (211) des Belüftungsorgans (21) verbunden sind, wobei jeder gelochte Abschnitt (27) mehrere Abschnitte aufweist, von denen jede mit Löchern (272) versehen ist, die entlang des Umfangs des Abschnitts verteilt sind, wobei die Löcher (272), die sich in einer unteren Hälfte eines Abschnitts befinden, eine größere Anzahl und/oder größere Durchmesser aufweisen als die Löcher (272), die sich in einer oberen Hälfte des Abschnitts befinden.

16. Anlage nach einem der vorhergehenden Ansprüche, **dadurch gekennzeichnet, dass** die Belüftungsvorrichtung (20) einen Lufteinlass (30) umfasst, der von außerhalb der Anlage kommt, einen Luftauslass (31) nach außerhalb der Anlage und eine oder mehrere Lüftungsklappen (32), die den Lufteinlass (30) und/oder den Luftauslass (31) verschließen, wenn das Belüftungsorgan (21) abgeschaltet ist.

17. Anlage nach einem der vorhergehenden Ansprüche, **dadurch gekennzeichnet, dass** die durch die organischen Stoffe (1) geblasene oder angesaugte Luft einen biologischen Falter (50) durchströmt, nachdem sie die Zelle verlassen hat (10), wobei dieser biologische Filter (50) eine Bodenplatte (51) umfasst, die aus der Sohle (40), Aussparungen (42), Trennwänden (52) und abnehmbaren Stützen (13) des gleichen Typs wie der der Zellen (10) besteht.

18. Anlage nach einem der vorhergehenden Ansprüche, dadurch gekenntzeichnet, dass jede freie Aussparung der Stütze (42) von einem Stopfen verschlossen werden kann, der durch Schraubung oder Klemmung abnehmbar befestigt ist.
